# FASCICULE DE BREVET EUROPEEN

(11) **EP 2 307 926 B1**
(45) Date de publication et mention de la délivrance du brevet: **04.07.2012**
(21) Numéro de dépôt: 09784514.3
(22) Date de dépôt: 10.07.2009
(51) Int. Cl.: G02F 1/153, F24J 2/40, B32B 17/10

(54) **DISPOSITIF ÉLECTROCHROME À RÉFLEXION INFRAROUGE CONTRÔLÉE**
ELEKTROCHROMES BAUELEMENT MIT GESTEUERTER INFRAROTREFLEXION
ELECTROCHROMIC DEVICE WITH CONTROLLED INFRARED REFLECTION

(30) Priorité: 17.07.2008 FR 0854865
(43) Date de publication de la demande: 13.04.2011
(73) Titulaire: Saint-Gobain Glass France, 92400 Courbevoie (FR)
(72) Inventeur: BRESSAND, Emily, 75012 Paris (FR); GIRON, Jean-Christophe, B-4700 Eupen (BE); ROYER, Bastien, 53424 Remagen (DE); VALENTIN, Emmanuel, F-94420 Le Plessis Trevise (FR); DUBRENAT, Samuel, F-75017 Paris (FR)
(74) Mandataire: Neuviale, Bertrand
(86) Numéro de dépôt international: PCT/FR2009/051392
(87) Numéro de publication internationale: WO 2010/007303

(56) Documents cités:
- US-A1- 2004 021 927
- US-B1- 6 747 779
- HALE JEFFREY S ET AL: "Prospects for IR emissivity control using electrochromic structures" THIN SOLID FILMS 1999 FEB 8 ELSEVIER SCIENCE S.A., vol. 339, no. 1-2, 8 février 1999 (1999-02-08), pages 174-180, XP002512863

## Description

La présente invention concerne un dispositif électrochrome à réflexion infrarouge contrôlée, notamment destiné à constituer un panneau électrocommandable, notamment un vitrage.

On connaît des vitrages qui possèdent une capacité de réflexion de la lumière dans le domaine infrarouge. De tels vitrages ont montré des applications dans les domaines techniques les plus divers.

On peut ainsi notamment les utiliser en tant que vitrages d'une habitation afin, par exemple, d'assurer la régulation thermique de différentes pièces d'un immeuble en fonction de leurs expositions respectives au rayonnement solaire.

On peut bien entendu les utiliser dans d'autres domaines, tels que notamment le domaine aéronautique pour contrôler et réguler par exemple le rayonnement infrarouge admis par les différents hublots d'un aéronef.

On sait que les dispositifs électrochromes comportent une couche d'un matériau électrochrome en mesure d'insérer réversiblement et simultanément des ions et des électrons, dont les états d'oxydation qui correspondent aux états insérés et désinsérés sont d'une coloration distincte lorsqu'ils sont soumis à une alimentation électrique appropriée; l'un de ces états présentant une transmission lumineuse plus élevée que l'autre. Le matériau électrochrome est généralement à base d'oxyde de tungstène et doit être mis en contact avec une source d'électrons, telle que par exemple une couche électroconductrice transparente, et d'une source d'ions (des cations ou des anions) telle qu'un électrolyte conducteur ionique. On sait qu'une contre-électrode, en mesure également d'insérer de façon réversible des cations, doit être associée à la couche de matériau électrochrome, symétriquement par rapport à celle-ci, de sorte que, macroscopiquement, l'électrolyte apparaît comme un simple médium des ions. La contre-électrode doit être à base d'une couche neutre en coloration ou, du moins, transparente ou peu colorée quand la couche électrochrome est à l'état coloré.

L'oxyde de tungstène étant un matériau électrochrome cathodique, c'est-à-dire que son état coloré correspond à l'état le plus réduit, un matériau électrochrome anodique à base d'oxyde de nickel ou d'iridium est généralement utilisé pour la contre-électrode. Il a également été proposé d'utiliser un matériau optiquement neutre dans les états d'oxydation concernés, comme par exemple l'oxyde de cérium ou des matériaux organiques comme les polymères conducteurs électroniques (polyaniline) ou le bleu de prusse.

On peut ranger actuellement les systèmes électrochromes en deux catégories en fonction de l'électrolyte utilisé.

Dans la première catégorie l'électrolyte peut ainsi se présenter sous la forme d'un polymère ou d'un gel, tel que par exemple un polymère à conduction protonique, tel que ceux décrits dans les brevets européens EP 0 253 713, et EP 0 670 346 ou un polymère à conduction d'ions lithium, tel que ceux décrits dans les brevets EP 0 382 623, EP 0 518 754 ou EP 0 532 408.

Dans la seconde catégorie, l'électrolyte peut également être à base d'une couche minérale formant un conducteur ionique qui est isolé électriquement. Ces systèmes électrochromes sont alors désignés comme étant « tout solide ». On pourra se référer aux brevets européens EP 0 867 752 et EP 0 831 360.

On connaît d'autres types de systèmes électrochrome, tels que notamment les systèmes électrochromes dits « tout polymère », dans lesquels deux couches électroconductrices sont disposées de part et d'autre d'un empilement comprenant un polymère à coloration cathodique, un polymère isolant électronique conducteur ionique (de H⁺ ou Li⁺ tout particulièrement) et enfin un polymère à coloration anodique (tel que la polyaniline ou le polypyrrole).

On connaît enfin des systèmes dits « actifs » au sens de l'invention qui combinent des matériaux viologènes et des matériaux électrochromes par exemple présentant la séquence électrode conductrice/couche minérale ou polymère à propriétés électrochromes/couches (liquide,gel,polymère) à propriétés viologènes/électrode conductrice.

Ces systèmes à matériaux d'insertion réversibles sont particulièrement intéressants en ce qu'ils permettent de moduler l'absorption dans un domaine de longueurs d'onde plus large que les systèmes viologènes : ils peuvent absorber de manière variable non seulement dans le visible, mais également, notamment dans l'infrarouge , ce qui peut leur conférer un rôle optique et/ou thermique efficace.

Ces différents systèmes comportent deux couches électroconductrices qui enserrent une ou plusieurs couches électrochimiquement actives. Or, lorsque l'on crée une différence de potentiel entre ces deux couches électroconductrices, on contrôle, par la valeur de cette différence de potentiel, l'état de transmission/absorption du système, autrement dit le niveau de transparence de celui-ci.

Lorsque le système constitue un vitrage que l'on souhaite « électrocommandable » on privilégie bien entendu la transparence pour ces couches électroconductrices, si bien qu'elles doivent être réalisées dans des matériaux à la fois conducteurs du courant électrique et transparents, et ceci dans des gammes d'épaisseur que l'on rencontre habituellement dans le domaine des couches minces.

On fait appel habituellement à un matériau d'oxyde métallique dopé tel que l'oxyde d'étain dopé au fluor (SnO2 :F) ou l'oxyde d'indium dopé à l'étain (ITO) que l'on peut déposer sur différents substrats à chaud, notamment par pyrolyse sur du verre, comme la technique dite CVD, ou à froid notamment par des techniques sous vide de pulvérisation cathodique.

On a cependant constaté que, dans les épaisseurs où elles restent transparentes, les couches à base de ces matériaux ne donnent pas entière satisfaction, dans la mesure où elles ne sont pas suffisamment conductrices, si bien que lorsque l'on applique une tension électrique appropriée aux bornes du système pour provoquer le changement d'état nécessaire, le temps de réponse du système, ou temps de commutation est augmenté avec un changement d'état inhomogène des surfaces importantes.

Plus précisément, dans le cas par exemple où les deux couches électroconductrices sont à base d'oxyde d'indium dopé à l'étain (ITO), la résistivité de la couche de base, ou couche inférieure, qui est de l'ordre de 3 à 5 Ω/carré passe à 60-70 Ω/carré pour la couche supérieure en raison de sa plus faible épaisseur. On sait en effet que si la couche de base a une épaisseur de l'ordre de 500 nm, la couche supérieure quant à elle n'a qu'une épaisseur de l'ordre de 100 nm et ceci pour des raisons essentiellement liées à la contrainte mécanique générée dans l'empilement.

Cette différence de résistivité entre les couches inférieure et supérieure est à l'origine du ralentissement du temps de commutation du dispositif, c'est-à-dire du temps nécessaire pour que le système passe de son état le plus transparent à son état le plus opaque.

On comprend que, dans la plupart des applications et notamment dans le secteur des vitrages d'habitation et dans celui de l'automobile, qu'il s'agisse de vitrages électrochromes à transparence contrôlée ou à réflexion contrôlée, de tels défauts sont très difficilement acceptables par l'utilisateur, ce dernier souhaitant un changement aussi rapide et aussi régulier que possible.

US2004/021927 A1 décrit un dispositif électrochrome à réflexion infrarouge contrôlée de type électro-commandable, comportant un empilement déposé sur un substrat porteur, cet empilement comprenant successivement: a) une couche métallique apte à réfléchir le rayonnement infrarouge et formant une première électrode, b) un système fonctionnel électrochrome comprenant une couche d'un premier matériau électrochrome de stockage ionique, au moins une couche à fonction électrolytique, et une couche d'un second matériau électrochrome, c) une grille métallique transparente dans le domaine infrarouge formant une seconde électrode, et d) une couche antireflet.

Un dispositif électrochrome à réflexion infrarouge similaire est décrit par Jeffrey S. Hale et al. dans l'article "Prospects for IR emissivity control using electrochromic structures", Thin Solid Films, vol. 339 (1999), pages 174-180.

Un dispositif électrochrome feuillété est décrit dans le document US 6 747 779 B1.

Par ailleurs dans de nombreuses applications, notamment dans les cas où le système est de type infrarouge à réflexion électrocommandée, il est essentiel d'assurer sa protection contre les agressions extérieures auquel il est soumis lors de son utilisation, telles que notamment les agressions climatiques telles que les intempéries ou les agressions mécaniques telles que les chocs ou les rayures.

La présente invention a pour but de remédier à ces divers inconvénients en proposant un dispositif à réflexion infrarouge électrocommandable possédant des temps de commutation rapides, de l'ordre du dixième de ceux de l'état antérieur de la technique, qui présente entre son état coloré et son état décoloré une différence de réflexion importante et qui, de plus, soit protégé contre les diverses agressions extérieures auxquelles il risque d'être soumis au cours de son utilisation.

La présente invention a ainsi pour objet un dispositif électrochrome à réflexion infrarouge contrôlée de type électro-commandable, comportant, entre un substrat porteur transparent dans le domaine infrarouge et un contre-substrat, un empilement déposé sur le substrat porteur, cet empilement comportant successivement en partant du substrat porteur :
a) une grille métallique transparente dans le domaine infrarouge, formant une première électrode,
b) un système fonctionnel électrochrome comprenant une couche d'un premier matériau électrochrome de stockage ionique, au moins une couche à fonction électrolytique, et une couche d'un second matériau électrochrome,
c) une couche métallique apte à réfléchir le rayonnement infrarouge et formant une seconde électrode,
d) un intercalaire de feuilletage en polymère thermoplastique assurant une lamination ou contre substrat,
le substrat porteur et le contre-substrat comportant du saphir, ou du silicium, ou du germanium, ou du sulfure de zinc, ou de Zn Se, ou de tellure de cadmium, ou du fluorure de calcium, ou du fluorure de baryum ou de magnésium, ou du verre transparent à l'infrarouge, ou du polyéthylène.

Préférentiellement le substrat porteur sera à base de saphir et le contre substrat sera à base de verre transparent à l'infrarouge. Par ailleurs la couche de stockage ionique sera préférentiellement à base d'oxyde d'iridium.

La grille métallique, qui pourra être de type monocouche ou multicouche, pourra être à base d'aluminium, ou de platine, ou de palladium, ou de cuivre, ou préférentiellement d'or, ou être à base d'un alliage de ces métaux, ou à base de nitrure de titane.

Dans un mode de mise en oeuvre de l'invention la couche à fonction électrolytique sera de type bicouche et sera à base d'oxyde de tantale et d'oxyde de tungstène.

L'intercalaire de feuilletage pourra être à base de polyvinyle de butyle (PVB) ou d'éthylènevinylacétate, ou préférentiellement de polyuréthane (PU). Cet intercalaire de feuilletage pourra assurer le support des éléments de connectique qui amènent le courant aux électrodes.

La présente invention a également pour objet un panneau à dissipation énergétique contrôlée mettant en oeuvre un dispositif suivant l'une des caractéristiques mentionnées précédemment.

Selon un autre aspect de l'invention, elle vise l'utilisation d'un panneau tel que précédemment décrit en tant que vitrage pour le bâtiment, vitrage pour l'automobile, vitrage de véhicules industriels ou de transport collectif, ferroviaire, maritime, aérien, agricole , engin de chantier, rétroviseurs, miroirs, display et affichage, obturateur pour dispositifs d'acquisition d'images

On décrira ci-après, à titre d'exemple non limitatif, une forme d'exécution de la présente invention, en référence au dessin annexé sur lequel :
La figure 1 est une vue en coupe verticale d'un dispositif électrochrome à réflexion infrarouge contrôlée suivant l'invention,
La figure 2 est une vue schématique en coupe verticale d'un exemple de moyens destinés à assurer l'étanchéité du dispositif,
La figure 3 est une courbe représentant la variation de la réflexion d'un dispositif électrochrome suivant l'invention entre les états colorés et décolorés pour un éclairement dont la longueur d'onde varie entre 3 µm et 5 µm.

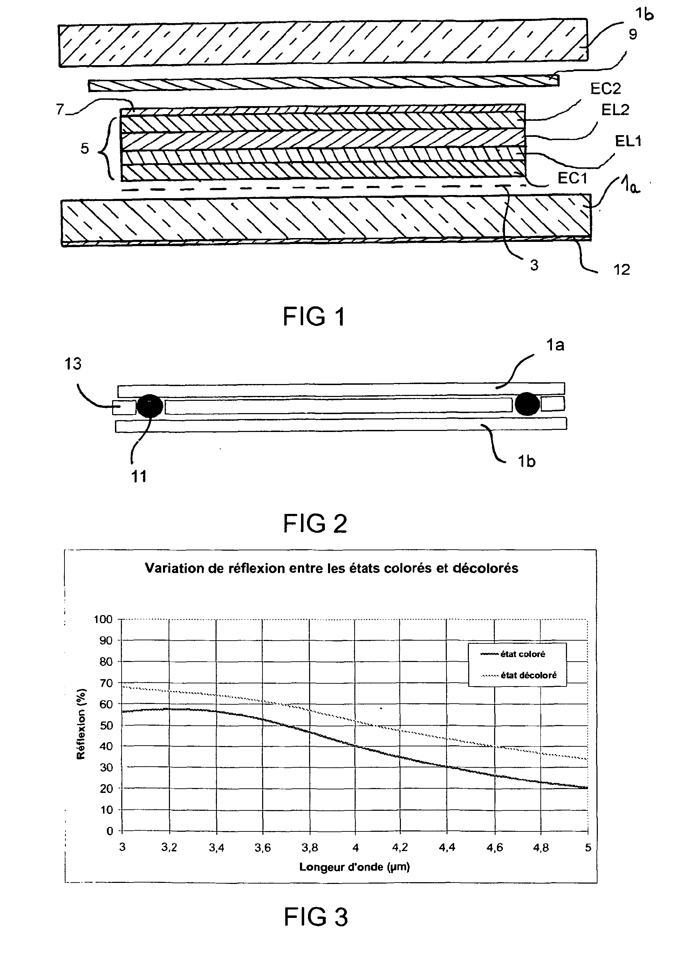

On a représenté sur la figure 1 un dispositif électrochrome, à réflexion infrarouge contrôlée suivant l'invention qui est notamment destiné à être appliqué à la réalisation de baies d'un local dont on souhaite pouvoir réguler le flux thermique admis afin de tenir compte du niveau d'exposition spécifique de chaque baie au rayonnement solaire.

De façon générale un tel dispositif est formé d'un empilement comprenant entre un substrat porteur 1 a et un contre substrat 1b, une grille métallique 3 transparente dans le domaine infrarouge, un système fonctionnel électrochrome 5, une couche métallique 7 apte à réfléchir l'infrarouge, et une feuille polymère thermoplastique 9 destinée à assurer le feuilletage du dispositif.

Plus précisément ce dispositif comprend ainsi :
- A) le substrat porteur 1a transparent dans le domaine infrarouge, dans un domaine de longueur d'ondes compris entre 1 et 30 µm, et qui est notamment à base de saphir, mais qui pourrait également être formé de silicium, de germanium, de sulfure de zinc, de ZnSe, de tellure de cadmium (CdTe), de fluorure de calcium, de fluorure de baryum ou de magnésium, de verre transparent à l'infrarouge, ou de polyéthylène.
- B) la grille métallique 3, préférentiellement réalisée en or, mais qui pourra également être faite notamment d'aluminium, de platine, de palladium, ou de cuivre. Cette grille pourra également être à base d'un alliage métallique ou être de type multicouches et ceci en fonction de la gamme spectrale infrarouge considérée. Cette grille métallique assurera de plus une fonction d'alimentation en courant du dispositif,
- C) le système fonctionnel électrochrome 5, lui même à base de deux couches extrêmes électroactives électrochromes EC1 et EC2 entre lesquelles est disposée une ou plusieurs couches à fonction électrolytique ELₙ.

Les couches EC1 et EC2 comportent au moins l'un des composés suivants utilisé seul ou en mélange:oxydes de tungstène, de niobium, d'étain, de bismuth, de vanadium, de nickel, d'iridium, d'antimoine, de tantale, et/ou un métal additionnel tel que le titane, le rhénium ou le cobalt, et la couche à fonction électrolytique EL, qui peut en fait être formée de l'association d'au moins une couche à base d'un matériau choisi parmi les oxydes, de tantale, de tungstène, de molybdène, d'antimoine, de niobium, de chrome, de cobalt, de titane, d'étain, de nickel, de zinc éventuellement allié à de l'aluminium, de zirconium, d'aluminium, de silicium, éventuellement allié à de l'aluminium, du nitrure de silicium éventuellement allié à de l'aluminium ou du bore, du nitrure de bore, du nitrure d'aluminium, de l'oxyde de vanadium éventuellement allié à de l'aluminium, de l'oxyde d'étain et de zinc, au moins un de ces oxydes étant éventuellement hydrogéné ou nitruré.

Dans le présent mode de mise en oeuvre de l'invention le système fonctionnel électrochrome 5 comprend ainsi:
- une première couche EC1 d'un matériau électrochrome anodique, en oxyde d'iridium hydraté IᵣOₓH_{y}, d'une épaisseur de 70 nm,
- une première couche à fonction électrolytique EL1 d'oxyde de tungstène WO₃, d'une épaisseur de 100 nm,
- une seconde couche à fonction électrolytique EL2 de tantale hydraté, d'une épaisseur de 100nm, et
- une seconde couche EC2 d'un matériau électrochrome cathodique à base d'oxyde de tungstène HₓWO₃, d'une épaisseur de 380 nm,
- D) la couche métallique 7 apte à réfléchir l'infrarouge sera optimisée dans la gamme spectrale de travail du dispositif. Cette couche métallique, qui sera notamment à base d'or, pourrait ainsi être également à base d'oxydes métalliques très conducteurs tels que de l'oxyde de zinc dopé d'aluminium ou de fluor, de SnO2-ZnO, d'aluminium, de platine, de palladium ou de cuivre. Cette couche métallique assure, suivant l'invention, une double fonction, à savoir une fonction de réflexion du rayonnement infrarouge et une fonction d'alimentation en courant de la couche électrochrome,
- E) la feuille polymère thermoplastique 9 est destinée à assurer une lamination du dispositif en vue de l'obtention d'un vitrage feuilleté. Elle pourra préférentiellement être une feuille de polyuréthane (PU) mais elle pourra également être à base de polyvinyle de butyral (PVB) ou d'éthylènevinylacétate (EVA). Cette feuille polymère peut réaliser de façon intéressante une fonction de support des éléments de connectique qui assurent l'alimentation en courant des couches électrochromes EC1 et EC2. Eventuellement la face externe du substrat 1 a sera revêtue d'une couche anti-réfléchissante 12.

Suivant la présente invention le système fonctionnel électrochrome 5 peut bien entendu avoir des configurations diverses, en fonction du résultat que le dispositif est destiné à fournir.

Ainsi que représenté sur la figure 2 le dispositif suivant l'invention est pourvu de moyens aptes à assurer son étanchéité vis à vis de l'extérieur et de l'intérieur et comprend ainsi un premier joint périphérique 11 en contact avec les faces internes des deux substrats 1a et 1b, qui est adapté pour réaliser une barrière aux agressions chimiques extérieures ainsi qu'une barrière à l'eau sous forme vapeur.

Le dispositif comprend également un second joint périphérique 13 qui est également en contact avec les faces internes des deux substrats 1 a et 1 b et qui est positionné en périphérie du premier joint d'étanchéité 11. Il réalise une barrière d'étanchéité avec l'eau liquide et assure un moyen de renforcement mécanique de la gorge périphérique, évitant aux substrats minces de se briser lors du feuilletage ou lors des manipulations successives.

La présente invention est particulièrement intéressante en ce qu'elle permet de se libérer de l'utilisation des TCO, à savoir les oxydes conducteurs transparents utilisés pour assurer l'alimentation en courant des couches électrochromes et qui sont la cause de la faible vitesse de commutation des dispositifs électrochromes habituels.

Les mesures qui ont été effectuées sur des vitrages conformes à la présente invention ont ainsi permis de mesurer des temps de commutation de l'ordre de la seconde pour des vitrages d'une surface de 3X3 cm², de 7s pour une surface de 30X30 cm² et de 50s pour une surface de 1m².

Par ailleurs, ainsi que représenté sur la figure 3, la variation de réflexion entre les états colorés et décolorés du dispositif électrochrome à réflexion infrarouge contrôlée suivant l'invention est effective puisque, pour des rayonnements infrarouges de longueurs d'ondes comprises entre 3 nm et 5 nm, elle est de l'ordre de 15%.

## Revendications

1. Dispositif électrochrome à réflexion infrarouge contrôlée de type électro-commandable, comportant, entre un substrat porteur (1a) transparent dans le domaine infrarouge et un contre-substrat (1 b), un empilement déposé sur le substrat porteur (1a), cet empilement comprenant successivement en partant du substrat porteur (1a):
a) une grille métallique (3) transparente dans le domaine infrarouge, formant une première électrode,
b) un système fonctionnel électrochrome (5) comprenant une couche d'un premier matériau électrochrome de stockage ionique (EC1), au moins une couche à fonction électrolytique (EL1,EL2), et une couche d'un second matériau électrochrome (EC2),
c) une couche métallique (7) apte à réfléchir le rayonnement infrarouge et formant une seconde électrode,
d) un intercalaire de feuilletage (9) en polymère thermoplastique assurant une lamination ou contre-substrat (1b), le substrat porteur (1a) et le contre substrat (1b) comportant du saphir, ou du silicium, ou du germanium, ou du sulfure de zinc, ou de ZnSe, ou du tellure de cadmium, ou du fluorure de calcium, ou du fluorure de baryum ou de magnésium, ou du verre transparent à l'infrarouge, ou du polyéthylène.

2. Dispositif électrochrome à réflexion infrarouge contrôlée suivant la revendication 1 dans lequel le substrat porteur (1a) est à base saphir et le contre substrat (1b) est à base de verre transparent à l'infrarouge.

3. Dispositif électrochrome à réflexion infrarouge contrôlée suivant la revendication 1 dans lequel la grille métallique (3) est de type monocouche ou multicouche et est à base d'aluminium, ou de platine, ou de palladium, ou de cuivre, ou d'or, ou est à base d'un alliage de ces métaux, ou à base de nitrure de titane

4. Dispositif électrochrome à réflexion infrarouge contrôlée suivant l'une des revendications précédentes dans lequel la couche de stockage ionique (EC1) est à base d'oxyde d'iridium.

5. Dispositif électrochrome à réflexion infrarouge contrôlée suivant l'une des revendications précédentes dans lequel la couche à fonction électrolytique est de type bicouche.

6. Dispositif électrochrome à réflexion infrarouge contrôlée suivant la revendication 5 dans lequel la couche électrolytique (EL1,EL2) est à base d'oxyde de tantale et d'oxyde de tungstène.

7. Dispositif électrochrome à réflexion infrarouge contrôlée suivant l'une des revendications précédentes dans lequel l'intercalaire de feuilletage (9) est à base de polyvinyle de butyle (PVB) ou d'éthylènevinylacétate, ou de polyuréthane (PU).

8. Dispositif électrochrome à réflexion infrarouge contrôlée suivant l'une des revendications précédentes dans lequel l'intercalaire de feuilletage (9) assure le support des éléments de connectique qui amènent le courant aux électrodes (3,7).

9. Panneau à dissipation énergétique contrôlée utilisant un dispositif suivant l'une des revendications précédentes.

10. Panneau suivant la revendication 9 étant constitué d'un vitrage.

11. Utilisation du panneau selon l'une des revendications 9 ou 10 en tant que vitrage pour le bâtiment, vitrage pour l'automobile, vitrage de véhicules industriels ou de transport collectif, ferroviaire, maritime, aérien, agricole , engin de chantier, rétroviseurs, miroirs, display et affichage, obturateur pour dispositifs d'acquisition d'images.

## Claims

1. Electrochromic device having controlled infrared reflection of the electrically controllable type, comprising, between a carrier substrate (1a) transparent in the infrared range and a counter-substrate (1b), a multilayer stack arranged on the carrier substrate (1a), this multilayer stack comprising, in succession, starting from the carrier substrate (1a) :
a) a metal grid (3) transparent in the infrared range, forming a first electrode;
b) an electrochromic functional system (5) comprising a layer (EC1) of an ion-storage first electrochromic material, at least one layer (EL1, EL2) having an electrolytic function, and a layer (EC2) of a second electrochromic material;
c) a metal layer (7) capable of reflecting the infrared radiation and forming a second electrode; and
d) a lamination interlayer (9) made of a thermoplastic polymer ensuring lamination to the counter-substrate (1b),
the carrier substrate (1a) and the counter-substrate (1b) comprising sapphire or silicon or germanium or zinc sulfide or ZnSe or cadmium telluride, or calcium fluoride, or barium fluoride or magnesium fluoride, or glass transparent to infrared, or polyethylene.

2. Electrochromic device having controlled infrared reflection according to Claim 1, in which the carrier substrate (1a) is based on sapphire and the counter-substrate (1b) is based on glass transparent to infrared.

3. Electrochromic device having controlled infrared reflection according to Claim 1, in which the metal grid (3) is of the monolayer or multilayer type and is based on aluminum or platinum or palladium or copper or gold or is based on an alloy of these metals, or based on titanium nitride.

4. Electrochromic device having controlled infrared reflection according to one of the preceding claims, in which the ion-storage layer (EC1) is based on iridium oxide.

5. Electrochromic device having controlled infrared reflection according to one of the preceding claims, in which the layer having an electrolytic function is of the bilayer type.

6. Electrochromic device having controlled infrared reflection according to Claim 5, in which the electrolytic layer (EL1, EL2) is based on tantalum oxide and tungsten oxide.

7. Electrochromic device having controlled infrared reflection according to one of the preceding claims, in which the lamination interlayer (9) is based on polyvinyl butyral (PVB) or on ethylene vinyl/acetate, or on polyurethane (PU).

8. Electrochromic device having controlled infrared reflection according to one of the preceding claims, in which the lamination interlayer (9) ensures that the connection elements bringing the current to the electrodes (3, 7) are supported.

9. Panel having controlled energy dissipation, using a device according to one of the preceding claims.

10. Panel according to Claim 9, consisting of glazing.

11. Use of the panel according to either of Claims 9 and 10 as architectural glazing, automotive glazing, glazing for industrial vehicles or for rail, sea and air public vehicles, agricultural vehicles, building site machines, rear-view and other mirrors, displays and shutters for image acquisition devices.

## Patentansprüche

1. Elektrochrome Vorrichtung mit gesteuerter Infrarotreflexion, vom elektrisch steuerbaren Typ, die zwischen einem im Infrarotbereich transparenten Trägersubstrat (1a) und einem Gegensubstrat (1b) einen auf das Trägersubstrat (1a) aufgebrachten Stapel umfasst, wobei dieser Stapel - von dem Trägersubstrat (1a) ausgehend - nacheinander umfasst:
a) ein im Infrarotbereich transparentes Metallgitter (3), das eine erste Elektrode bildet,
b) ein elektrochromes Funktionssystem (5), das eine Schicht aus einem ersten elektrochromen Material zur Ionenspeicherung (EC1), wenigstens eine Schicht mit elektrolytischer Funktion (EL1, EL2) sowie eine Schicht aus einem zweiten elektrochromen Material (EC2) umfasst,
c) eine Metallschicht (7), die geeignet ist, die Infrarotstrahlung zu reflektieren, und die eine zweite Elektrode bildet,
d) eine Laminierungszwischenschicht (9) aus thermoplastischem Polymer, die ein Verbinden mit dem Gegensubstrat (1b) sicherstellt,
wobei das Trägersubstrat (1a) und das Gegensubstrat (1b) Saphir oder Silicium oder Germanium oder Zinksulfid oder ZnSe oder Cadmiumtellurid oder Calciumfluorid oder Barium- oder Magnesiumfluorid oder infrarotdurchlässiges Glas oder Polyethylen umfassen.

2. Elektrochrome Vorrichtung mit gesteuerter Infrarotreflexion nach Anspruch 1, wobei das Trägersubstrat (1a) auf der Basis von Saphir ist und das Gegensubstrat (1b) auf der Basis von infrarotdurchlässigem Glas ist.

3. Elektrochrome Vorrichtung mit gesteuerter Infrarotreflexion nach Anspruch 1, wobei das Metallgitter (3) vom einlagigen oder mehrlagigen Typ ist und auf der Basis von Aluminium oder Platin oder Palladium oder Kupfer oder Gold ist oder auf der Basis einer Legierung aus diesen Metallen oder auf der Basis von Titannitrid ist.

4. Elektrochrome Vorrichtung mit gesteuerter Infrarotreflexion nach einem der vorstehenden Ansprüche, wobei die Ionenspeicherungsschicht (EC1) auf der Basis von Iridiumoxid ist.

5. Elektrochrome Vorrichtung mit gesteuerter Infrarotreflexion nach einem der vorstehenden Ansprüche, wobei die Schicht mit elektrolytischer Funktion vom zweilagigen Typ ist.

6. Elektrochrome Vorrichtung mit gesteuerter Infrarotreflexion nach Anspruch 5, wobei die elektrolytische Schicht (EL1, EL2) auf der Basis von Tantaloxid und von Wolframoxid ist.

7. Elektrochrome Vorrichtung mit gesteuerter Infrarotreflexion nach einem der vorstehenden Ansprüche, wobei die Laminierungszwischenschicht (9) auf der Basis von Polyvinylbutyral (PVB) oder von Ethylenvinylacetat oder von Polyurethan (PU) ist.

8. Elektrochrome Vorrichtung mit gesteuerter Infrarotreflexion nach einem der vorstehenden Ansprüche, wobei die Laminierungszwischenschicht (9) das Tragen der Anschlusselemente, die den Strom zu den Elektroden (3, 7) führen, sicherstellt.

9. Paneel mit gesteuerter Energiedissipation, das eine Vorrichtung nach einem der vorstehenden Ansprüche verwendet.

10. Paneel nach Anspruch 9, das von einer Verglasung gebildet ist.

11. Verwendung des Paneels nach einem der Ansprüche 9 oder 10, als Verglasung für Gebäude, Verglasung für Kraftfahrzeuge, Verglasung von Nutzfahrzeugen oder Fahrzeugen für Personenbeförderung, Eisenbahn-, See-, Lufttransport, landwirtschaftlichen Transport, Baumaschinen, Rückspiegel, Spiegel, Displays und Anzeigen, Blenden für Bildaufnahmevorrichtungen.
